# EUROPÄISCHE PATENTSCHRIFT

(11) **EP 3 676 545 B1**
(45) Veröffentlichungstag und Bekanntmachung des Hinweises auf die Patenterteilung: **13.12.2023**
(21) Anmeldenummer: 18772717.7
(22) Anmeldetag: 31.08.2018
(51) Int. Cl.: F25B 37/00

(54) **VERFAHREN ZUM AUSBRINGEN EINES ABSORPTIONSMITTELS ODER KÄLTEMITTELS**
METHOD FOR APPLYING AN ABSORBENT OR REFRIGERANT
PROCÉDÉ D'ÉMISSION D'UN ABSORBANT OU D'UN RÉFRIGÉRANT

(30) Priorität: 31.08.2017 DE 102017120080
(43) Veröffentlichungstag der Anmeldung: 08.07.2020
(73) Patentinhaber: Technische Universität Berlin, 10623 Berlin (DE)
(72) Erfinder: MEYER, Thomas, 10435 Berlin (DE); ZIEGLER, Felix, 16548 Glienicke (DE)
(74) Vertreter: Bittner, Thomas L.
(86) Internationale Anmeldenummer: PCT/DE2018/100744
(87) Internationale Veröffentlichungsnummer: WO 2019/042499

(56) Entgegenhaltungen:
- WO-A1-82/00597
- DE-C1- 10 134 330
- DE-T2- 69 510 821
- US-A- 5 622 060
- US-A- 5 730 001
- US-A1- 2011 056 664

## Beschreibung

Die Erfindung betrifft ein Verfahren zum Ausbringen eines Absorptionsmittels in einer Absorptionskältemaschine oder einer Absorptionswärmepumpe, sowie ein Verfahren zum Ausbringen eines Kältemittels in einer Kältemaschine oder einer Wärmepumpe.

### Hintergrund

Eine Absorptionswärmepumpe ist eine Art von Wärmepumpe, die nur vergleichsweise geringfügigen mechanischen Antrieb benötigt. Eine Absorptionskältemaschine ist technisch vergleichbar, nur dass hier die Erzeugung von Kälte (das heißt der Entzug von Wärme) der eigentliche Zweck ist. Bei solchen Anlagen wird in einem Absorber ein Absorptionsmittel (Absorbens) auf eine Wärmetauschfläche eines Wärmetauschers oder -übertragers ausgebracht, derart, dass das Absorptionsmittel ein Kältemittel absorbiert, zum Beispiel Wasser oder Ammoniak, welches zum Beispiel als dampfförmiges Medium in den Bereich der Wärmetauschfläche eingebracht wird. Bei der Absorption des Kältemittels entsteht Absorptionswärme, die an ein Kühlmedium in dem Wärmetauscher abgegeben werden kann.

Bei bekannten Vorrichtungen erfolgt der Austrag des Absorptionsmittels auf die Wärmetauschfläche des Wärmetauschers mittels Berieseln.

In dem Dokument WO 98 / 12487 A1 sind ein Wärmetauschverfahren und ein Wärmetauscher beschrieben, die vorsehen, ein dampfförmiges Kältemedium durch ein flüssiges Lösungsmittel (Absorptionsmittel) absorbieren zu lassen und die hierbei entstehende Wärme auf das Arbeitsmedium eines Wärmetauschers zu übertragen. Das Absorptionsmittel wird mittels Sprühen ausgetragen, sodass ein Tropfennebel auf den Wärmetauscher gelangt, wodurch sich das Absorptionsmittel auf der Wärmetauschfläche des Wärmetauschers verteilt. Es bildet sich oberflächenseitig ein im Wesentlichen stationärer Film auf der Wärmetauschfläche.

Das Dokument DE 695 10 821 T2 betrifft einen Absorptionszyklus mit einem Kühl- und/oder Heizsystem, das ein fließendes Arbeitsmedium enthält, das im Wesentlichen aus einer wässrigen Lösung Natriumhydroxid, Kaliumhydroxid oder Gemischen davon und einer effektiven Additivmenge eines primären, sekundären oder tertiären aliphatischen, cycloaliphatischen oder aromatischen Amins besteht, das in der Lage ist, die Rate der Wasserdampfsorption des fließenden Arbeitsmediums zu erhöhen. Des Weiteren ist ein Verfahren zum Betrieb eines Absorptionszyklus offenbart.

Das Dokument DE 38 08 257 C1 betrifft eine mit einem Zweistoff-Arbeitsmittel betriebene Kompressions-Wärmepumpe oder Kältemaschine mit Temperaturwechsler und Vorführung der Lösung im Resorber, die einen schräg geneigt angeordneten Platten-Wärmetauscher aufweist.

Gegenstrom-Absorber und -Desorber für den Einsatz in Absorptionskältekreislaufsystemen und thermischen Aufladesystemen sind in dem Dokument WO 82 / 00597 A1 offenbart. Die Vorrichtungen haben eine erhöhte Verweilzeit und Oberfläche, was zu verbesserten Wärme- und Stoffübertragungseigenschaften führt. Die Apparate können in thermische Boostingsysteme mit offenem Kreislauf eingebaut werden, in denen Dampf sowohl als Kältemitteldampf, der dem Absorberabschnitt zugeführt wird, als auch als Wärmezufuhr zum Antrieb des Desorberabschnitts des Systems dient.

In dem Dokument US 5 622 060 A ist eine Vorrichtung für eine wässrige LiBr-Lösung mit horizontaler Ansaugung des Gefriertyps offenbart, die ein Haupteinspritzrohr zum Führen einer darin enthaltenen wässrigen LiBr-Lösung umfasst, wobei das Haupteinspritzrohr mit einem Regenerator verbunden ist, ein Nebeneinspritzrohr, das mit einem Ende eines unteren Abschnitts des Haupteinspritzrohrs gekoppelt ist, eine Einspritzschaufel, die drehbar mit einem Umfangsabschnitt des Nebeneinspritzrohrs verbunden ist, eine Vielzahl von Einspritzlöchern, die abwechselnd an einer Seite einer gegenüberliegenden Oberfläche ausgebildet sind, und Durchgangslöcher, die mit einem Mittelabschnitt der Einspritzschaufel ausgebildet sind.

Das Dokument DE 101 34 330 C1 betrifft eine Benetzungsvorrichtung für Wärmetauscher mit in Form von Rohrbündeln übereinander angeordneten Ringrohrspiralen, die sich dadurch auszeichnet, dass jeweils oberhalb der obersten Ringrohrspirale des Rohrbündels eines Wärmetauschers ein oder mehrere Quellrohrspiralen mit in der oberen und/oder unteren Rohrhälfte angeordneten Quellbohrungen angeordnet sind, wobei die Quellrohrspirale/n den gleichen Radiusverlauf wie die darunter liegende/n Ringrohrspirale/n des Wärmetauschers aufweist/aufweisen und diese in ihrer gesamten Länge überdeckt/überdecken.

Ein Verteiler zur Verwendung in einem Dampfkompressionssystem mit einem Gehäuse ist in dem Dokument US 2011 / 0 056 664 A1 offenbart. Der Verteiler ist so konfiguriert, dass er in einem Wärmetauscher mit einem Rohrbündel positioniert werden kann, das eine Vielzahl von Rohren umfasst, die sich im Wesentlichen horizontal in dem Wärmetauscher erstrecken. Eine Vielzahl von Verteilungsvorrichtungen sind in dem Gehäuse ausgebildet, wobei die Vielzahl von Verteilungsvorrichtungen so konfiguriert ist, dass sie ein in den Verteiler eintretendes Fluid auf das Rohrbündel aufbringen. Die Umhüllung ist aus einer einheitlichen Konstruktion gebildet.

Thermisch angetriebene Wärmepumpen bieten hervorragende Möglichkeiten, die Effizienz der Wärmebereitstellung deutlich zu erhöhen. In bereits bestehende Heizungssysteme integriert, ermöglichen diese Art der Wärmepumpen in einfachster Bauart Brennstoffeinsparungen, wobei die Einsparung je nach Effizienz der bestehenden und der neuen Heizungsanlage und der notwendigen Temperatur auf der Nutzerseite stark variieren kann.

Nichtsdestotrotz gibt es Einsatzgrenzen und -hemmnisse. Thermisch angetriebene Absorptionskälteanlagen können prinzipiell auch als Wärmepumpe zur Bereitstellung von Heizungswärme eingesetzt werden. Hierbei nimmt die kalte Seite des Prozesses (Verdampfer) Wärme aus der Wärmequelle (Umgebung, Aquifer etc.) auf und hebt diese Wärme auf das Heizungsnutztemperaturniveau. Durch diese Nutzung von Umgebungswärme wird die Verbrennung fossiler Energieträger nur für einen Teil der Heizwärme benötigt. Ein in derartigen Anlagen in der Klimatechnik oft eingesetztes Arbeitsstoffpaar ist Wasser und wässrige Lithiumbromidlösung (Wasser / LiBr). Es wird üblicherweise in berieselten Rohrbündel-Wärmeübertragern und Stoffübertragern eingesetzt und zeichnet sich durch hohe Effizienz und vergleichsweise hohe Wärme- und Stoffübertragungsdichten aus.

Ein großes Hindernis des Einsatzes dieser Technologie als Wärmepumpe besteht in der Beschränkung auf Umgebungstemperaturen über 0°C bei der Verwendung von reinem Wasser als Kältemittel, weil gerade in den kalten Wintermonaten bei Außentemperaturen um und unter 0°C der Heizwärmebedarf hoch ist. Unter 0°C ist in der Kältetechnik die Verwendung des Arbeitsstoffpaares Ammoniak und wässrige Ammoniaklösung üblich. Ammoniak / Wasser Anlagen werden bereits als Gasabsorptionswärmepumpen eingesetzt, da durch die Verwendung von Ammoniak (Erstarrungstemperatur reinen Ammoniaks knapp -78°C) als Kältemittel die Beschränkung durch die Erstarrungstemperatur im Verdampfer entfällt. Allerdings erhöht sich durch die Flüchtigkeit des Absorbens Wasser und die Giftigkeit sowie die vergleichsweise hohen Arbeitsdrücke des Ammoniaks der Aufwand zum Bau der Anlagen im Vergleich zu Wasser / LiBr Anlagen.

Salze, welche bei Umgebungsbedingungen als Schmelzen in flüssiger Form vorliegen, erschließen andere natürliche Kältemittel wie zum Beispiel Ethanol für die Absorptionswärmepumpentechnologie. In einer Absorptionskälteanlage kann zum Beispiel das Stoffpaar Ethanol/Ethyl-Methyl-Imidazolium-Di-Ethyl-Phosphat [EMIM][DEP] verwendet werden. Es zeigt sich, dass das Stoffpaar Ethanol [EMIM][DEP] für die Bereitstellung von Heizungswärme auch bei Verdampfertemperaturen unter 0°C eingesetzt werden kann.

Ionische Flüssigkeiten als Absorbens für zum Beispiel Ethanol erreichen bei Einsatz in den bekannten berieselten horizontalen Rohrbündel-Wärme- und Stoffübertragern nicht annähernd (teilweise <50%) die Wärme- und Stoffübertragungsdichten von wässriger Lithiumbromidlösung. Gründe hierfür sind die ungünstigeren Stoffeigenschaften.

Lösungen von Ethanol in ionischen Flüssigkeiten weisen im Vergleich zu wässriger Lithiumbromidlösung deutlich höhere dynamische Viskositäten (Faktor 4 bis 20 größer) auf, was den Rieselfilm beim Abfließen deutlich dicker macht (Faktor 1,5 bis 3) und somit zu einem schlechteren Wärmedurchgang von der Filmoberfläche bis zum strömenden Kühlwasser im Rohrinnern führt. Der Effekt wird vergrößert durch die kleinere Wärmeleitfähigkeit der ionischen Flüssigkeiten. Somit wird die Filmoberfläche nicht so gut gekühlt, was die Dampfabsorption an der Filmoberfläche verschlechtert. Darüber hinaus ist aufgrund der höheren Viskosität der ionischen Flüssigkeit mit einem niedrigeren Diffusionskoeffizienten zu rechnen, so dass auch die Diffusion von Ethanol von der Filmoberfläche in den Film gehemmt wird im Vergleich zum Wasser in wässriger Lithiumbromidlösung.

### Zusammenfassung

Aufgabe der Erfindung ist es, eine verbesserte Technologie in Verbindung mit dem Ausbringen eines Absorptionsmittels in einer Absorptionskältemaschine oder einer Absorptionswärmepumpe anzugeben, um die Absorption eines Kältemittels, welches mit dem Absorptionsmittel ein Arbeitspaar bildet, zu verbessern. Des Weiteren soll eine verbesserte Technologie in Verbindung mit dem Ausbringen eines Kältemittels in einer Kältemaschine oder einer Wärmepumpe geschaffen werden.

Erfindungsgemäße Verfahren sind in den unabhängigen Ansprüchen 1 und 10 definiert. Ausgestaitungen sind Gegenstand von abhängigen Unteransprüchen.

Nach einem nicht erfindungsgemäßen Aspekt ist eine Vorrichtung für eine Absorptionskältemaschine oder eine Absorptionswärmepumpe geschaffen, die einen Wärmeübertrager aufweist, welcher von einem Arbeitsmedium durchströmt wird. Es ist eine Verteileinrichtung für ein Sorptionsmittel (Absorbens) vorgesehen, die eingerichtet ist, in einer Kältemittelumgebung das Sorptionsmittel auf eine Wärmetauschfläche des Wärmeübertragers auszubringen, derart, dass das Sorptionsmittel, welches mit dem Kältemittel ein Arbeitspaar bildet, das Kältemittel aus der Kältemittelumgebung zumindest teilweise absorbiert und hierbei freiwerdende Wärme (über die Wärmetauschfläche) an den Wärmeübertrager abgibt oder das Kältemittel aus dem Sorptionsmittel zumindest teilweise in eine Umgebung des Sorptionsmittels desorbiert und hierbei Wärme von dem Wärmeübertrager aufnimmt. Die Verteileinrichtung weist eine Strahleinrichtung auf, die eingerichtet ist, das Sorptionsmittel in Form von einem oder mehreren Strahlen auf die Wärmetauschfläche und hierbei auf der Wärmetauschfläche turbulente Strömungen des Sorptionsmittels ausbildend einzustrahlen.

Nach einem weiteren nicht erfindungsgemäßen Aspekt ist ein Absorber für eine Absorptionskältemaschine oder eine Absorptionswärmepumpe mit einer solchen Vorrichtung geschaffen. Nach einem zusätzlichen Aspekt ist ein Desorber für eine Absorptionskältemaschine oder eine Absorptionswärmepumpe mit einer solchen Vorrichtung geschaffen. Weitere Aspekte betreffen eine Absorptionskältemaschine sowie eine Absorptionswärmepumpe mit einer solchen Vorrichtung.

Ein erfindungsgemäßer Aspekt betrifft ein Verfahren zum Ausbringen eines Absorptionsmittels in einer Absorptionskältemaschine oder einer Absorptionswärmepumpe gemäß Anspruch 1, bei dem ein Wärmeübertrager von einem Arbeitsmedium durchströmt wird. Ein Sorptionsmittel wird mittels einer Verteileinrichtung in einer Kältemittelumgebung auf eine Wärmetauschfläche des Wärmeübertragers ausgebracht, derart, dass das Sorptionsmittel, welches mit dem Kältemittel ein Arbeitspaar bildet, das Kältemittel aus der Kältemittelumgebung zumindest teilweise absorbiert und hierbei freiwerdende Wärme an den Wärmeübertrager abgibt oder das Kältemittel aus dem Sorptionsmittel zumindest teilweise in eine Umgebung des Sorptionsmittels desorbiert und hierbei Wärme von dem Wärmeübertrager aufnimmt. Die Verteileinrichtung weist eine Strahleinrichtung auf, mit der das Sorptionsmittel in Form von einem oder mehreren Strahlen auf die Wärmetauschfläche und hierbei auf der Wärmetauschfläche turbulente Strömungen des Sorptionsmittels ausbildend eingestrahlt wird.

Nach einem weiteren nicht erfindungsgemäßen Aspekt ist eine Vorrichtung für eine Kältemaschine oder einer Wärmepumpe mit einem Wärmeübertrager, welcher von einem Arbeitsmedium durchströmt wird, und einer Verteileinrichtung für ein Kältemittel geschaffen. Die Verteileinrichtung ist eingerichtet, in einer Kältemitteiumgebung das Kältemittel auf eine Wärmetauschfläche des Wärmeübertragers auszubringen, derart, dass das Kältemittel zumindest teilweise in die Kältemittelumgebung verdampft und hierbei Wärme von dem Wärmeübertrager aufnimmt. Hierbei weist die Verteileinrichtung eine Strahleinrichtung auf, die eingerichtet ist, das Kältemittel in Form eines oder mehrerer Strahlen auf die Wärmetauschfläche und hierbei auf der Wärmetauschfläche turbulente Strömungen des Kältemittels ausbildend einzustrahlen.

Ein weiterer erfindungsgemäßer Aspekt betrifft ein Verfahren zum Ausbringen eines Kältemittels in einer Kältemaschine oder einer Wärmepumpe gemäß Anspruch 10, bei dem ein Wärmeübertrager von einem Arbeitsmedium durchströmt wird und ein Kältemittel mittels einer Verteileinrichtung in einer Kältemittelumgebung auf eine Wärmetauschfläche des Wärmeübertragers ausgebracht wird. Hierbei wird das Kältemittel zumindest teilweise in die Kältemittelumgebung verdampft und nimmt Wärme von dem Wärmeübertrager auf. Die Verteileinrichtung weist eine Strahleinrichtung auf, mit der das Kältemittel in Form eines oder mehrerer Strahlen auf die Wärmetauschfläche und hierbei auf der Wärmetauschfläche turbulente Strömungen des Kältemittels ausbildend eingestrahlt wird.

Die vorgeschlagenen Technologien verbessern die Prozesse des Ab- und des Desorbierens des Kältemittels im Bereich der Wärmetauschfläche an dem Wärmetauscher oder -übertrager. Das Einstrahlen und die hierdurch auf der Wärmetauschfläche induzierten turbulenten Strömungen des Sorptionsmittels in Form von einem oder mehreren Flüssigkeitsstrahlen verbessern das Ab- und das Desorbieren des Kältemittels.

Das Arbeitsmedium im Wärmeübertrager dient als Wärmeübertrager- oder Wärmetauscherfluid und bildet so ein Kühl- oder ein Heizmedium.

Die Kältemittelumgebung ist eine Umgebung, die Kältemitteldampf enthält.

Die vorgeschlagenen Technologien können in den verschiedenen Ausführungsformen zum Beispiel auf eingangs erwähnten Heizungsmarkt eingesetzt werden. Die Verwendung von zum Beispiel Ethanol als Kältemittel mit Hilfe ionischer Flüssigkeiten als Absorbens mit gleichen oder ähnlich hohen Wärme- und Stofftransportdichten wie wässrige Lithiumbromidlösung ermöglicht den Einsatz dieser hocheffizienten Absorptionswärmepumpentechnologie bei Umgebungstemperaturen weit unterhalb von 0°C. Weiterhin ist die Verwendung von Plattenwärmeübertragern und Stoffübertragern förderlich für möglichst einfach zu fertigende Anlagen in großer Stückzahl.

Weitere mögliche Anwendungsfelder sind die thermisch angetriebene Bereitstellung von Tiefkälte von bis zu -20°C, zum Beispiel für die Nutzung in Kühlhäusern oder Brauereibetrieben, in denen Kühlung unter 0°C für die Lagerung von Lebensmitteln notwendig ist.

Das Stoffpaar Ethanol / Ethyl-Methyl-Imidazolium-Di-Ethyl-Phosphat kann verwendet werden wie auch andere Medien, zum Beispiel auch wässrige Lithiumbromidlösung oder Mischungen ionischer Flüssigkeiten mit anderen Kältemitteln, wie zum Beispiel Methanol oder dergleichen.

Die Strahleinrichtung kann eingerichtet sein, dass Sorptionsmittel in Form von mehreren parallelen Strahlen auf die Wärmetauschfläche einzustrahlen.

Die Strahleinrichtung kann eingerichtet sein, dass Sorptionsmittel mit einem oder mehreren Querstrahlen auf die Wärmetauschfläche einzustrahlen, wobei die Querstrahlen zur Wärmetauschfläche quer verlaufen. Die Querstrahlen können in einem Winkel von etwa 90° auf die Wärmetauschfläche eingestrahlt werden.

Die Strahleinrichtung kann eingerichtet sein, dass Sorptionsmittel mit einem oder mehreren Schrägstrahien auf die Wärmetauschfläche einzustrahien, wobei die Schrägstrahlen zur Wärmetauschfläche schräg verlaufen. Die Strahleinrichtung kann eingerichtet sein, sowohl Querstrahlen wie auch Schrägstrahlen auf die Wärmetauschfläche einzustrahlen.

Die Strahleinrichtung kann eine Strahlplatte mit einer flächigen Verteilung von beabstandeten Strahlquellen aufweisen, die jeweils eine Quelle für einen der mehreren Strahlen des Sorptionsmittels bilden. Die Strahlquellen können bei dieser oder anderen Ausführungsformen eine Strahldüse aufweisen. Die Strahlquellen können bei dieser oder anderen Ausführungsformen eine oder mehrere Lochdüse aufweisen. Die Strahlplatte kann mit einer Lochplatte gebildet sein, die eine Anordnung von beabstandeten Durchbrüchen aufweist, die jeweils als eine Strahlquelle dienen. Bei dieser oder anderen Ausführungsformen können die mehreren Strahlen die Wärmetauschfläche an dem Wärmetauscher im Wesentlichen vollständig erfassend ausgebildet sein. Die Strahlplatte mit den Strahlquellen kann hinsichtlich ihrer flächigen Ausdehnung im Wesentlichen der flächigen Ausdehnung der gegenüberliegenden Wärmetauschfläche des Wärmetauschers entsprechen.

Das Sorptionsmittel kann mittels des einen oder der mehreren Strahlen auf der Wärmetauschfläche turbulente Strömungen in einem Oberflächenfilm des Sorptionsmittels ausbildend aufgebracht werden. Bei dieser Ausführungsform bildet sich auf der Wärmetauschfläche ein Oberflächenfilm mit den turbulenten Strömungen aus, welcher das Kältemittel absorbiert oder desorbiert.

Erfindungsgemäß gibt die Strahleinrichtung die Strahlen als kontinuierliche Strahlen des Sorptionsmittels ab. In einer nicht erfindungsgemäßen Alternative können die Strahlen als diskontinuierliche Strahlen des Sorptionsmittels auf die Wärmetauschfläche abgegeben werden, zum Beispiel in Form von pulsierenden Strahlen. Eine Kombination von kontinuierlichen und diskontinuierlichen Strahlen kann vorgesehen sein.

Erfindungsgemäß ist vorgesehen, dass das Induzieren der turbulenten Strömungen des Sorptionsmittels auf der Wärmetauschfläche mittels einer erhöhten Einstrahlgeschwindigkeit des Sorptionsmittels erfolgt. Eine erhöhte Einstrahlgeschwindigkeit des Sorptionsmittels im Sinne der Erfindung ist eine Einstrahlgeschwindigkeit, die über eine Geschwindigkeit hinausgeht, die durch einen Eigengewichtsdruck des Sorptionsmittels in der Strahleinrichtung und eine Fallbeschleunigung beim Auftreffen des Sorptionsmittels auf die Wärmetauschfläche entsteht.

Es kann vorgesehen sein, dass das Sorptionsmittel durch erhöhten Vordruck mit erhöhter Austrittsgeschwindigkeit aus der Strahleinrichtung tritt. Ein erhöhter Vordruck im Sinne der Erfindung ist ein Überdruck größer als 0,25 bar im Vergleich zum Druck bei Austritt des Sorptionsmittels. Der erhöhte Vordruck kann einen Differenzdruck von 0,25 bar bis 2,50 bar, vorzugsweise 1,00 bar bis 2,50 bar, umfassen. Die Druckdifferenz wird durch eine Pumpe erzeugt. Eine erhöhte Austrittsgeschwindigkeit im Sinne der Erfindung ist eine Austrittsgeschwindigkeit bei erhöhtem Vordruck. Die erhöhte Austrittsgeschwindigkeit kann einen Bereich von 3 m/s bis 15 m/s, vorzugsweise 7 m/s bis 15 m/s, umfassen.

Die erhöhte Austrittsgeschwindigkeit des Sorptionsmittels aus der Strahleinrichtung kann zu der erhöhten Einstrahlgeschwindigkeit des einen oder der mehreren Strahlen beim Auftreffen auf die Wärmetauschfläche führen, sodass auf der Wärmetauschfläche turbulente Strömungen des Sorptionsmittels induziert werden. Erfindungsgemäß wird auf die Zugabe eines Additivs zum Sorptionsmittel verzichtet. Es kann in einer nicht erfindungsgemäßen Alternative auch vorgesehen sein, mindestens ein Additiv zum Sorptionsmittel zu geben. Es kann vorgesehen sein, dass der eine oder die mehreren Strahlen mit einer Einstrahlgeschwindigkeit von 3 m/s bis 15 m/s, vorzugsweise 7 m/s bis 15 m/s, auf die Wärmetauschfläche treffen.

Erfindungsgemäß ist vorgesehen, dass das Induzieren der turbulenten Strömungen des Kältemittels auf der Wärmetauschfläche mittels einer erhöhten Einstrahlgeschwindigkeit des Kältemittels erfolgt. Dies kann in gleicher Weise wie das Induzieren der turbulenten Strömungen des Sorptionsmittels geschehen.

Die Einstrahlung von Strahlen kann in beliebigem Winkel zur Richtung der Schwerkraft erfolgen. Insbesondere kann vorgesehen sein, dass der eine oder die mehreren Strahlen in einem Winkel senkrecht zur Richtung der Schwerkraft auf die Wärmetauschfläche einstrahlen. Es kann vorgesehen sein, dass die Wärmetauschfläche parallel zur Richtung der Schwerkraft ausgerichtet ist, d.h., dass die Flächennormalen auf der Wärmetauschfläche senkrecht zur Richtung der Schwerkraft ausgerichtet sind. Alternativ kann vorgesehen sein, dass der eine oder die mehreren Strahlen parallel zur Richtung der Schwerkraft auf die Wärmetauschfläche einstrahlen und die Wärmetauschfläche senkrecht zur Richtung der Schwerkraft ausgerichtet ist. Durch die hohe Einstrahlgeschwindigkeit der Strahlen können unabhängig von der Einstrahlrichtung auf der Wärmetauschfläche turbulente Strömungen des Sorptionsmittels oder Kältemittels induziert werden.

Die das Sorptionsmittel betreffenden Ausgestaltungen können in Verbindung mit dem Kältemittel entsprechend vorgesehen sein.

In einem nicht erfindungsgemäßen Beispiel kann eine Vorrichtung für eine Absorptionskältemaschine oder eine Absorptionswärmepumpe vorgesehen sein, mit einem Wärmeübertrager, welcher von einem Arbeitsmedium durchströmt wird; und einer Verteileinrichtung für ein Sorptionsmittel, die eingerichtet ist, in einer Kältemitteldampf enthaltenden Umgebung das Sorptionsmittel auf eine Wärmetauschfläche des Wärmeübertragers auszubringen, derart, dass das Sorptionsmittel, welches mit dem Kältemittel ein Arbeitspaar bildet, das Kältemittel aus der den Kältemitteldampf enthaltenden Umgebung zumindest teilweise absorbiert und hierbei freiwerdende Wärme an den Wärmeübertrager abgegeben wird oder das Kältemittel aus dem Sorptionsmittel zumindest teilweise in eine Umgebung des Sorptionsmittels desorbiert und hierfür Wärme von dem Wärmeübertrager geliefert wird. Hierbei kann die Verteileinrichtung eine Strahleinrichtung aufweisen, die eingerichtet ist, das Sorptionsmittel in Form eines oder mehrerer Strahlen auf die Wärmetauschfläche und hierbei auf der Wärmetauschfläche turbulente Strömungen des Sorptionsmittels ausbildend einzustrahlen.

In einem anderen nicht erfindungsgemäßen Beispiel kann eine Vorrichtung für eine Absorptionskältemaschine oder eine Absorptionswärmepumpe vorgesehen sein, die einen Wärmeübertrager aufweist, welcher von einem Arbeitsmedium durchströmt wird. Es kann eine Verteileinrichtung für ein Sorptionsmittel (Absorbens) vorgesehen sein, die eingerichtet ist, in einer Kältemittelumgebung das Sorptionsmittel auf eine Wärmetauschfläche des Wärmeübertragers auszubringen, derart, dass das Sorptionsmittel, welches mit dem Kältemittel ein Arbeitspaar bildet, das Kältemittel aus der Kältemittelumgebung zumindest teilweise absorbiert und hierbei freiwerdende Wärme (über die Wärmetauschfläche) an den Wärmeübertrager abgibt oder das Kältemittel aus dem Sorptionsmittel zumindest teilweise in die Kältemittelumgebung desorbiert und hierbei Wärme von dem Wärmeübertrager aufnimmt. Die Verteileinrichtung kann eine Strahleinrichtung aufweisen, die eingerichtet ist, das Sorptionsmittel in Form von einem oder mehreren Strahlen auf die Wärmetauschfläche und hierbei auf der Wärmetauschfläche turbulente Strömungen des Sorptionsmittels ausbildend einzustrahlen.

In Verbindung mit dem Verfahren zum Ausbringen des Sorptionsmittels in einer Absorptionskältemaschine oder einer Absorptionswärmepumpe können die vorangehend zu der Vorrichtung erläuterten Ausgestaltungen vorgesehen sein. Das Kältemittel kann in einer Umgebung des Sorptionsmittels vorhanden sein. Das Kältemittel kann zumindest teilweise aus dem Sorptionsmittel in die Kältemittelumgebung desorbiert werden und hierbei Wärme von dem Wärmeübertrager aufnehmen.

Als Absorbens kann eine Flüssigkeit aus der folgenden Gruppe verwendet werden: Wasser, Lösungen von Salz, Salzschmelze und ionische Flüssigkeit.

### Beschreibung von Ausführungsbeispielen

Nachfolgend werden weitere Ausführungsbeispiele unter Bezugnahme auf Figuren näher erläutert. Hierbei zeigen:
- Fig. 1: eine schematische Darstellung einer Wärmetauschfläche eines Wärmetauschers oder -übertragers in der Ausführung als Absorber;
- Fig. 2: eine schematische Darstellung einer Austrittsgeschwindigkeit eines Sorptionsmittels an einer Lochdüse in Abhängigkeit von einer an der Lochdüse anliegenden Druckdifferenz; und
- Fig. 3: eine schematische Darstellung von mittleren Rieselfilmgeschwindigkeiten eines dem Stand der Technik entsprechenden schwerkraftgetriebenen Aufgabe- und Verteilsystems für Stoffdaten von wässrigem Lithiumbromid.

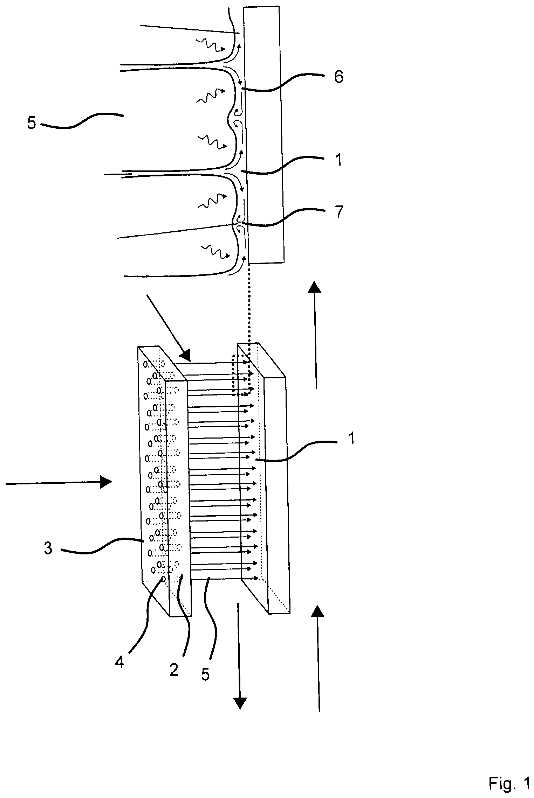

Fig. 1 zeigt eine schematische Darstellung einer Wärmetauschfläche 1 eines Wärmetauschers oder -übertragers in der Ausführung als Absorber, der von einem als Kühlmedium ausgeführten Arbeitsmedium durchströmt ist, beispielsweise Kühlwasser. Der Wärmetauschfläche 1 gegenüberliegend ist eine Strahleinrichtung 2 angeordnet, die in der gezeigten beispielhaften Ausführungsform mit einer Lochplatte 3 gebildet ist. Die Lochplatte 3 weist eine Anordnung beabstandeter Durchbrüche oder Öffnungen 4 auf, die jeweils als Strahlquelle für einen Strahl 5 dienen, mit dem ein Absorptionsmittel (Absorbens) auf die gegenüberliegende Wärmetauschfläche 1 eingestrahlt wird. In Dampfform wird weiterhin ein Kältemittel eingebracht, beispielsweise Wasserdampf, derart, dass das Kältemittel von dem Absorbens zumindest zum Teil absorbiert wird, wodurch Absorptionswärme entsteht, die über die Wärmetauschfläche 1 an das Arbeitsmedium des Wärmeübertragers abgegeben werden kann.

In einer Detaildarstellung zeigt Fig. 1 (vgl. obere Darstellung) das Auftreffen der Strahlen 5 des Absorptionsmittels mit erhöhter Einstrahlgeschwindigkeit auf der Wärmetauschfläche 1, derart, dass sich dort ein Oberflächenfilm 6 mit turbulenten Strömungen 7 bildet. Die turbulenten Strömungen 7 unterstützen und verstärken die Absorption des Kältemittels durch das Absorbens.

Die Strahlen treffen im Wesentlichen im rechten Winkel auf die Wärmetauschfläche 1. Ein schräger Verlauf in Bezug auf die Wärmetauschfläche kann vorgesehen sein. Die Strahlen 5 verlaufen im Wesentlichen parallel in dem dargestellten Ausführungsbeispiel.

Die vorgeschlagene Technologie kann insbesondere auch in Verbindung mit einem Gemisch von ionischer Flüssigkeit und Kältemittel genutzt werden, mit dem Ziel die Wärme- und Stoffstromdichten zu erhöhen. Nachteilige Wärme- und Stoffübertragungseigenschaften der ionischen Flüssigkeit werden überwunden.

Bei den bekannten berieselten Horizontalrohren findet die für das Erreichen hoher Stromdichten wesentliche Durchmischung des Films auf der Wärmetauschfläche hauptsächlich beim Ab- und Auftropfen der Salzlösung vom oder auf das Rohr statt, während die Stromdichten beim Abfließen auf der Rohraußenseite im Wesentlichen durch molekularen Stoff- und Wärmetransport quer zur Strömungsrichtung des Filmes bestimmt werden und klein sind.

Mittels der hier vorgeschlagenen Technologien des Einstrahlens des Absorbens wird während des gesamten Filmströmungsprozesses durch erzwungene Durchmischung des Films (ähnlich der Vermischung durch Tropfen bei den berieselten Horizontalrohren) die Wärme- und Stofftransportdichten deutlich erhöht. Insbesondere bei den Stoffen mit niedrigeren Wärmeleitfähigkeiten und Diffusionskoeffizienten können leistungssteigernde Wirkungen erreicht werden.

Die Durchmischung des absorbierenden Films auf der Wärmetauschfläche 1 wird verbessert, welcher mittels der in geringem Abstand zueinander und über der gesamten Übertragerfläche in hoher Anzahl verteilten (dünnen) Flüssigkeitsstrahlen erzeugt wird, die das Absorbens auf eine geneigte, gekühlte ebene und ggf. oberflächenstrukturierte Platte "schießen". Die auf diese Weise induzierte turbulente Filmströmung auf der Wärmetauschfläche 1 sorgt für eine bessere Durchmischung im Vergleich zur Strömung auf der Horizontalrohraußenseite und somit zu einer Leistungssteigerung in Bezug auf den Wärme- sowie den Stofftransport.

Mit ionischen Flüssigkeiten oder anderen Absorbentien mit niedrigen molekularen Wärme- und Stofftransportkoeffizienten sind zumindest die Wärme- und Stofftransportleistungsdichten von Absorptionskälteanlagen/-wärmepumpen mit wässriger Lithiumbromidlösung erreichbar. Darüber hinaus sind durch den Einsatz von ebenen Platten als Wärme- und Stoffübertrager variablere, kompaktere und simplere Bauformen im Vergleich zu Horizontalrohrbündelübertragern ermöglicht.

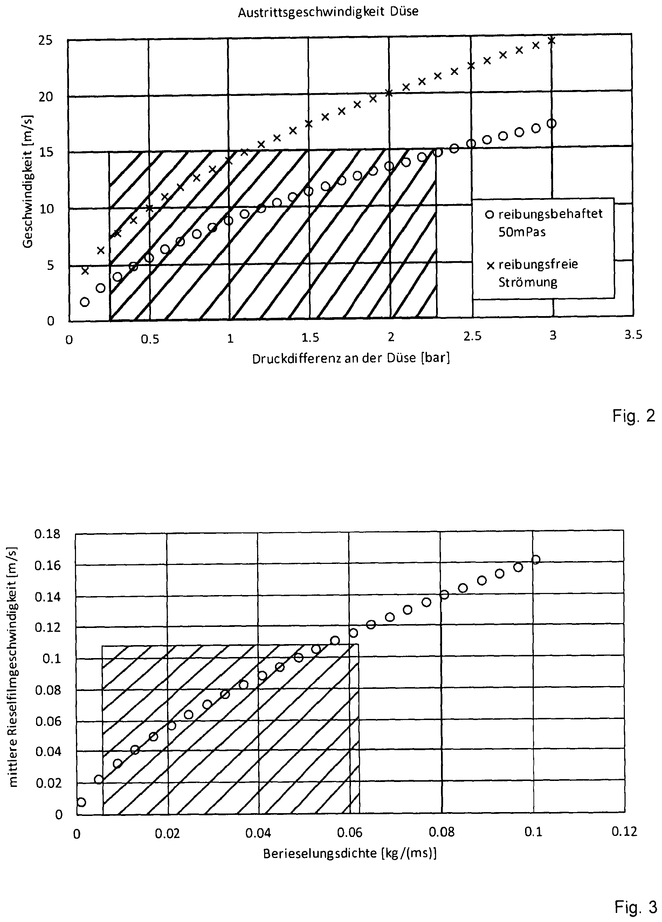

Fig. 2 zeigt den Verlauf der Austrittsgeschwindigkeit eines Sorptionsmittels an einer Lochdüse unter erhöhtem Druck als Funktion der an der Lochdüse anliegenden Druckdifferenz. Die maximal erreichbaren Austrittsgeschwindigkeiten bei entsprechenden Druckdifferenzen sind mit Kreuzen markiert. Hierbei wurden Reibungseffekte vernachlässigt. Die Austrittsgeschwindigkeiten bei reibungsbehafteter Strömung durch die Lochdüse mit einer dynamischen Viskosität von 50 mPas sind mit Kreisen markiert. Eine dynamischen Viskosität von 50 mPas ist vergleichsweise hoch, insbesondere etwa um einen Faktor von 10 höher als typische Absorbentien wie wässriges Lithiumbromid. Der typische Betriebsdruckbereich ist in dem Diagramm grau schattiert dargestellt und liegt je nach Pumpentyp bei 0,25 bis 2,50 bar. Somit sind reale (reibungsbehaftete) Strahlgeschwindigkeiten von 3 bis 15 m/s zu erwarten.

In Fig. 3 werden im Vergleich zum in Fig. 2 dargestellten Verlauf die mittleren Rieselfilmgeschwindigkeiten eines dem Stand der Technik entsprechenden schwerkraftgetriebenen Aufgabe- und Verteilsystems für Stoffdaten von wässrigem Lithiumbromid gezeigt. Übliche Berieselungsdichten sind ebenfalls grau schattiert dargestellt und reichen von 0,002 bis 0,070 kg/(ms). Die zugehörigen mittleren Rieselfilmgeschwindigkeiten reichen von 0,02 bis 0,11 m/s und sind im Vergleich zu den Strahlgeschwindigkeiten um einen Faktor 100, d.h. um zwei Größenordnungen kleiner.

## Patentansprüche

1. Verfahren zum Ausbringen eines Absorptionsmittels in einer Absorptionskältemaschine oder einer Absorptionswärmepumpe, bei dem
- ein Wärmeübertrager von einem Arbeitsmedium durchströmt wird; und
- ein additivfreies Sorptionsmittel mittels einer Verteileinrichtung in einer Kältemittelumgebung auf eine Wärmetauschfläche (1) des Wärmeübertragers ausgebracht wird, derart, dass das Sorptionsmittel, welches mit dem Kältemittel ein Arbeitspaar bildet,
- das Kältemittel aus der Kältemittelumgebung zumindest teilweise absorbiert und hierbei freiwerdende Wärme an den Wärmeübertrager abgibt oder
- das Kältemittel aus dem Sorptionsmittel zumindest teilweise in eine Umgebung des Sorptionsmittels desorbiert und hierbei Wärme von dem Wärmeübertrager aufnimmt;
wobei die Verteileinrichtung eine Strahleinrichtung (2) aufweist, mit der das Sorptionsmittel in Form eines oder mehrerer Strahlen (5) auf die Wärmetauschfläche (1) und hierbei auf der Wärmetauschfläche (1) turbulente Strömungen des Sorptionsmittels ausbildend eingestrahlt wird, wobei die Strahleinrichtung (2) die Strahlen (5) als kontinuierliche Strahlen (5) des Sorptionsmittels abgibt, wobei das Induzieren der turbulenten Strömungen des Sorptionsmittels auf der Wärmetauschfläche (1) mittels einer erhöhten Einstrahlgeschwindigkeit des Sorptionsmittels erfolgt, derart, dass auf der Wärmetauschfläche (1) turbulente Strömungen ohne Zugabe eines Additivs induziert werden.

2. Verfahren nach Anspruch 1, wobei die Strahleinrichtung (2) das Sorptionsmittel in Form von mehreren parallelen Strahlen (5) auf die Wärmetauschfläche (1) einstrahlt.

3. Verfahren nach Anspruch 1 oder 2, wobei die Strahleinrichtung (2) das Sorptionsmittel mit einem oder mehreren Querstrahlen auf die Wärmetauschfläche (1) einstrahlt, wobei die Querstrahlen zur Wärmetauschfläche (1) quer verlaufen.

4. Verfahren nach mindestens einem der vorangehenden Ansprüche, wobei die Strahleinrichtung (2) das Sorptionsmittel mit einem oder mehreren Schrägstrahlen auf die Wärmetauschfläche (1) einstrahlt, wobei die Schrägstrahlen zur Wärmetauschfläche (1) schräg verlaufen.

5. Verfahren nach mindestens einem der vorangehenden Ansprüche, wobei die Strahleinrichtung (2) eine Strahlplatte mit einer flächigen Verteilung von beabstandeten Strahlquellen aufweisend bereitgestellt wird, die jeweils eine Quelle für einen der mehreren Strahlen des Sorptionsmittels bilden.

6. Verfahren nach mindestens einem der vorangehenden Ansprüche, wobei das Sorptionsmittel mittels des einen oder der mehreren Strahlen (5) auf der Wärmetauschfläche (1) turbulente Strömungen in einem Oberflächenfilm des Sorptionsmittels ausbildend aufgebracht wird.

7. Verfahren nach mindestens einem der vorangehenden Ansprüche, wobei eine Pumpe das Sorptionsmittel bei einem Vordruck bereitstellt, der etwa 0,25 bar bis etwa 2,50 bar größer ist als der Druck bei Austritt des Sorptionsmittels aus der Strahleinrichtung (2).

8. Verfahren nach mindestens einem der vorangehenden Ansprüche, wobei die Strahleinrichtung (2) das Sorptionsmittel mit einer Einstrahlgeschwindigkeit von etwa 3 m/s bis etwa 15 m/s auf der Wärmetauschfläche (1) einstrahlt.

9. Verfahren nach mindestens einem der vorangehenden Ansprüche, wobei die Strahleinrichtung (2) den Strahl oder die mehreren Strahlen (5) in einem Winkel senkrecht zur Richtung der Schwerkraft auf die Wärmetauschfläche (1) einstrahlt.

10. Verfahren zum Ausbringen eines Kältemittels in einer Kältemaschine oder einer Wärmepumpe, bei dem
- ein Wärmeübertrager von einem Arbeitsmedium durchströmt wird; und
- ein additivfreies Kältemittel mittels einer Verteileinrichtung in einer Kältemittelumgebung auf eine Wärmetauschfläche (1) des Wärmeübertragers ausgebracht wird, derart, dass das Kältemittel zumindest teilweise in die Kältemittelumgebung verdampft und hierbei Wärme von dem Wärmeübertrager aufnimmt;
wobei die Verteileinrichtung eine Strahleinrichtung (2) aufweist, mit der das Kältemittel in Form eines oder mehrerer Strahlen (5) auf die Wärmetauschfläche (1) und hierbei auf der Wärmetauschfläche (1) turbulente Strömungen des Kältemittels ausbildend eingestrahlt wird, wobei die Strahleinrichtung (2) die Strahlen (5) als kontinuierliche Strahlen (5) des Kältemittels abgibt, wobei das Induzieren der turbulenten Strömungen des Kältemittels auf der Wärmetauschfläche (1) mittels einer erhöhten Einstrahlgeschwindigkeit des Kältemittels erfolgt, derart, dass auf der Wärmetauschfläche (1) turbulente Strömungen ohne Zugabe eines Additivs induziert werden.

## Claims

1. A method for dispensing an absorbent in an absorption refrigerator or an absorption heat pump, in which
- a working fluid flows through a heat exchanger; and
- an additive-free sorbent is dispensed by means of a distribution device onto a heat exchange surface (1) of the heat exchanger in a refrigerant environment such that the sorbent, which forms a working pair with the refrigerant,
- at least partially absorbs the refrigerant from the refrigerant environment and emits heat released in this process to the heat exchanger, or
- at least partially desorbs the refrigerant from the sorbent into an environment of the sorbent and in this process absorbs heat from the heat exchanger;
wherein the distribution device has a jet device (2) with which the sorbent is emitted in the form of one or more jets (5) onto the heat exchange surface (1), turbulent flows of the sorbent forming thereby on the heat exchange surface (1), wherein the jet device (2) emits the jets (5) as continuous jets (5) of the sorbent, wherein inducing the turbulent flows of the sorbent on the heat exchange surface (1) is carried out by means of an increased immission speed of the sorbent such that turbulent flows are induced on the heat exchange surface (1) without adding an additive.

2. The method according to claim 1, wherein
the jet device (2) emits the sorbent onto the heat exchange surface (1) in the form of multiple parallel jets (5).

3. The method according to claim 1 or 2, wherein
the jet device (2) emits the sorbent onto the heat exchange surface (1) with one or more transverse jets, wherein the transverse jets run transverse to the heat exchange surface (1).

4. The method according to at least one of the preceding claims, wherein
the jet device (2) emits the sorbent onto the heat exchange surface (1) with one or more inclined jets, wherein the inclined jets run inclined to the heat exchange surface (1).

5. The method according to at least one of the preceding claims, wherein
the jet device (2) is provided comprising a jet plate with a planar distribution of spaced jet sources, each of which forms a source for one of the multiple jets of the sorbent.

6. The method according to at least one of the preceding claims, wherein
the sorbent is applied by means of the one or more jets (5) so as to generate turbulent flows in a surface film of the sorbent on the heat exchange surface (1).

7. The method according to at least one of the preceding claims, wherein
a pump provides the sorbent at an primary pressure that is about 0.25 bar to about 2.50 bar greater than the pressure when the sorbent exits the jet device (2).

8. The method according to at least one of the preceding claims, wherein
the jet device (2) emits the sorbent onto the heat exchange surface (1) at an emission speed of about 3 m/s to about 15 m/s.

9. The method according to at least one of the preceding claims, wherein
the jet device (2) emits the jet or the multiple jets (5) onto the heat exchange surface (1) at an angle perpendicular to the gravitational direction.

10. A method for dispensing a refrigerant in a refrigerator or a heat pump, in which
- a working medium flows through a heat exchanger; and
- an additive-free refrigerant is dispensed onto a heat exchange surface (1) of the heat exchanger by means of a distributing device in a refrigerant environment such that the refrigerant at least partially evaporates into the refrigerant environment and in doing so absorbs heat from the heat exchanger;
wherein the distribution device has a jet device (2) with which the refrigerant is emitted in the form of one or more jets (5) onto the heat exchange surface (1), turbulent flows of the sorbent forming thereby on the heat exchange surface (1), wherein the jet device (2) emits the jets (5) as continuous jets (5) of the refrigerant, wherein inducing the turbulent flows of the refrigerant on the heat exchange surface (1) is carried out by means of an increased emission speed of the refrigerant such that turbulent flows are induced on the heat exchange surface (1) without adding an additive.

## Revendications

1. Procédé de distribution d'un agent absorbant dans un réfrigérateur à absorption ou dans une pompe à chaleur à absorption, dans lequel
- un échangeur thermique est traversé par un fluide de travail ; et
- un agent de sorption sans additif est distribué sur une surface d'échange thermique (1) de l'échangeur thermique dans un environnement de réfrigérant, de telle façon que l'agent de sorption formant une paire de travail avec le réfrigérant
- absorbe au moins partiellement le réfrigérant à partir de l'environnement de réfrigérant et délivre de la chaleur ainsi libérée à l'échangeur thermique ou
- désorbe le réfrigérant à partir de l'agent de sorption au moins partiellement dans un environnement de l'agent de sorption et reçoit ainsi de la chaleur de l'échangeur thermique ;
dans lequel
le dispositif de distribution présente un dispositif de projection (2), avec lequel l'agent de sorption est projeté sous la forme d'un ou de plusieurs jets (5) sur la surface d'échange thermique (1) en formant ainsi des flux turbulents d'agent de sorption sur la surface d'échange thermique (1), dans lequel le dispositif de projection (2) délivre les jets (5) comme des jets continus (5) d'agent de sorption,
dans lequel la génération des flux turbulents d'agent de sorption sur la surface d'échange thermique (1) est effectuée à l'aide d'une vitesse de projection élevée d'agent de sorption, de manière à générer des flux turbulents sur la surface d'échange thermique (1) sans ajout d'additif.

2. Procédé selon la revendication 1, dans lequel
le dispositif de projection (2) projette l'agent de sorption sous la forme de plusieurs jets parallèles (5) sur la surface d'échange thermique (1).

3. Procédé selon la revendication 1 ou 2, dans lequel
le dispositif de projection (2) projette l'agent de sorption avec un ou plusieurs jets transversaux sur la surface d'échange thermique (1), les jets transversaux s'étendant transversalement à la surface d'échange thermique (1).

4. Procédé selon l'une au moins des revendications précédentes, dans lequel
le dispositif de projection (2) projette l'agent de sorption avec un ou plusieurs jets obliques sur la surface d'échange thermique (1), les jets obliques s'étendant de façon oblique par rapport à la surface d'échange thermique (1).

5. Procédé selon l'une au moins des revendications précédentes, dans lequel
le dispositif de projection (2) est mis à disposition avec une plaque de projection présentant une répartition surfacique de sources de projection espacées, lesquelles forment respectivement une source pour l'un parmi la pluralité de jets d'agent de sorption.

6. Procédé selon l'une au moins des revendications précédentes, dans lequel
l'agent de sorption est appliqué à l'aide de l'un ou de plusieurs des jets (5) sur la surface d'échange thermique (1) en formant des flux turbulents dans un film de surface de l'agent de sorption.

7. Procédé selon l'une au moins des revendications précédentes, dans lequel
une pompe fournit l'agent de sorption avec une pression préalable, laquelle est supérieure d'environ 0,25 à environ 2,50 bar par rapport à la pression de sortie de l'agent de sorption hors du dispositif de projection (2).

8. Procédé selon l'une au moins des revendications précédentes, dans lequel
le dispositif de projection (2) projette l'agent de sorption avec une vitesse de projection d'environ 3 m/s à environ 15 m/s sur la surface d'échange thermique (1).

9. Procédé selon l'une au moins des revendications précédentes, dans lequel
le dispositif de projection (2) projette le jet ou la pluralité de jets (5) selon un angle perpendiculaire à la direction de gravité sur la surface d'échange thermique (1).

10. Procédé de distribution d'un réfrigérant dans un réfrigérateur à absorption ou dans une pompe à chaleur à absorption, dans lequel
- un échangeur thermique est traversé par un fluide de travail ; et
- un réfrigérant sans additif est distribué sur une surface d'échange thermique (1) de l'échangeur thermique dans un environnement de réfrigérant au moyen d'un dispositif de distribution, de telle façon que le réfrigérant est au moins partiellement évaporé dans l'environnement de réfrigérant et reçoit ainsi de la chaleur de l'échangeur thermique ;
dans lequel
le dispositif de distribution présente un dispositif de projection (2), avec lequel le réfrigérant est projeté sous la forme d'un ou de plusieurs jets (5) sur la surface d'échange thermique (1) en formant ainsi des flux turbulents de réfrigérant sur la surface d'échange thermique (1), dans lequel le dispositif de projection (2) délivre les jets (5) comme des jets continus (5) de réfrigérant, dans lequel la génération des flux turbulents de réfrigérant sur la surface d'échange thermique (1) est effectuée à l'aide d'une vitesse de projection élevée de réfrigérant, de manière à générer des flux turbulents sur la surface d'échange thermique (1) sans ajout d'additif.
